# EUROPÄISCHE PATENTANMELDUNG

(11) **EP 3 633 249 A1**
(43) Veröffentlichungstag der Anmeldung: **08.04.2020**
(21) Anmeldenummer: 18465588.4
(22) Anmeldetag: 02.10.2018
(51) Int. Cl.: F16K 5/06, F16K 11/087, F16K 27/10, F01P 7/14

(54) **FLUIDVENTIL, FAHRZEUG, VERFAHREN ZUM ABDICHTEN**

(71) Anmelder: Continental Automotive GmbH, 30165 Hannover (DE)
(72) Erfinder: Plaeru, George, 300620 Timisoara (RO); Pop, Daniel-Marius, 437315 Suciu de Sus (RO); Popa, Alexandru, 240048 Rimnicu Vilcea (RO); Belin, Cosmin, 300282 Timisoara (RO)

(57) **Zusammenfassung**

Es wird ein Fluidventil (10) vorgeschlagen mit einem einen Gehäusedeckel (17) aufweisenden Ventilgehäuse (15), einem relativ zum Ventilgehäuse stellbaren Ventilkörper (16) und mindestens zwei mit dem Ventilgehäuse (15) gefügten Rohrelementen (11, 12), welche mit dem Ventilgehäuse (15) derart gefügt sind, dass sie am Ventilkörper (16) anliegen und dabei eine Relativbewegung des Ventilkörpers (16) ihnen gegenüber ermöglichen, wobei die Rohrelemente (11, 12) in einem Bereich ihrer jeweiligen ventilkörperseitigen Enden mit dem Ventilgehäuse (15) stoffschlüssig verbunden (20) sind, um das Fluidventil (10) gegenüber der Umgebung des Fluidventils (10) abzudichten.

Es wird ferner eine Verwendung eines Fluidventils (10) als Kühlwasserventil eines Kühlwasserkreislaufs vorgeschlagen.

Es wird des Weiteren eine Verwendung eines Fluidventils (10) als Mischventil eines Wärmemittelkreislaufs vorgeschlagen.

Außerdem wird ein Fahrzeug mit einem Kühlmittelkreislauf oder Wärmemittelkreislauf vorgeschlagen, wobei der Kühlmittelkreislauf oder der Wärmemittelkreislauf mit einem Fluidventil der zuvor beschriebenen Art ausgestattet ist.

## Beschreibung

Die vorliegende Erfindung betrifft ein Fluidventil und ein Fahrzeug mit einem Kühlkreislauf oder einen Wärmemittelkreislauf mit dem Fluidventil.

Unter dem Fluidventil wird insbesondere ein Kühlwasserventil verstanden, insbesondere zur Verwendung in dem Fahrzeug.

Unter dem Fahrzeug ist jede Art von Fahrzeug zu verstehen, welches zum Betrieb mit einem flüssigen und/oder gasförmigen Kraftstoff betrieben wird. Darüber hinaus kann es sich bei dem Fahrzeug auch um ein ausschließlich oder teilweise elektrisch betriebenes Fahrzeug handeln. Das Fahrzeug kann insbesondere ein Personenkraftwagen und/oder ein Nutzfahrzeug sein.

Die vorliegende Erfindung hat die Aufgabe ein Fluidventil bereitzustellen, welches ohne ein Dichtelement und somit kostengünstig herstellbar ist.

Diese Aufgabe wird durch den Anspruch 1 gelöst, der ein Fluidventil unter Schutz stellt. Es werden ferner eine Verwendung des Fluidventils als Kühlwasserventil (vgl. Anspruch 7), eine Verwendung des Fluidventils als Mischventil (vgl. Anspruch 8), ein Fahrzeug mit dem Fluidventil (vgl. Anspruch 9) sowie ein Verfahren zur Abdichtung des Fluidventils (vgl. Anspruch 10) beansprucht. Vorteilhafte Ausführungsformen der Erfindung sind Gegenstand der Unteransprüche.

Die Erfindung löst die gestellte Aufgabe mit einem Fluidventil mit einem einen Gehäusedeckel aufweisenden Ventilgehäuse, einem relativ zum Ventilgehäuse stellbaren Ventilkörper und mindestens zwei mit dem Ventilgehäuse gefügten Rohrelementen, welche mit dem Ventilgehäuse derart gefügt sind, dass sie an Anlageflächen am Ventilkörper anliegen und/oder zumindest nahezu anliegen und dabei eine Relativbewegung des Ventilkörpers ihnen gegenüber ermöglichen, wobei die Rohrelemente in einem Bereich ihrer jeweiligen ventilkörperseitigen Enden mit dem Ventilgehäuse stoffschlüssig verbunden sind, um das Fluidventil gegenüber der Umgebung des Fluidventils abzudichten.

Die Abdichtung des vorgeschlagenen Fluidventils erfolgt ausschließlich über die besagten stoffschlüssigen Verbindungen zwischen den Rohrelementen und dem Ventilgehäuse . Es bedarf somit keiner zusätzlichen Dichtelemente.

Der sich zwischen dem jeweiligen Rohrelement und dem Ventilkörper einstellende Spalt bewirkt eine Leckage innerhalb des Ventils, die als solche im Vergleich zum Durchsatz durch den Ventilkörper klein ausfällt und daher hingenommen wird.

Nach einer Ausführungsform kann die stoffschlüssige Verbindung der ventilkörperseitigen Enden der Rohrelemente mit dem Ventilgehäuse geschlossen umlaufend ausgebildet sein. Auf diese Weise wird die Dichtwirkung zwischen dem Ventilgehäuse und den Rohrelementen am zuverlässigsten sichergestellt.

Nach einer weiteren Ausführungsform können die ventilkörperseitigen Anlageflächen der Rohrelemente korrespondierend zu einem Konturabschnitt des Ventilkörpers ausgebildet sein. Durch diese konstruktive Maßnahme wird die Anlage zwischen dem Ventilkörper und den Rohrelementen optimiert.

Nach einer weiteren Ausführungsform kann der mit den Rohrelementen korrespondierende Konturabschnitt des Ventilkörpers kugelförmig oder zylinderförmig ausgebildet sein. Nach einer weiteren Ausführungsform kann die Anlagefläche der Rohrelemente poliert sein. Diese Maßnahme dient der Realisierung einer möglichst geringen Reibung und einer verbesserten Anlage zwischen dem Ventilkörper und den Rohrelementen.

Nach einer weiteren Ausführungsform können die Rohrelemente mit dem Ventilgehäuse verklebt oder verschweißt, insbesondere laserverschweißt sein. Hierbei handelt es sich um stoffschlüssige Verbindungsalternativen, die bei der Fertigung in großen Stückzahlen rasch und kostengünstig realisierbar sind. Wenn das Ventilgehäuse mit den Rohrelementen laserverschweißt ist, dann kann das Ventilgehäuse aus einem laserlichtdurchlässigen Material gefertigt sein. Ferner können die Rohrelemente aus einem zum Laserschweißen geeigneten Kunststoff oder Metallwerkstoff gefertigt sein.

Der Ventilkörper kann mindestens einen Eingang und mindestens einen Ausgang aufweisen. Der mindestens eine Eingang und der mindestens eine Ausgang können gegenüber voneinander oder in einem Winkel, der zwischen 0° und 180° oder zwischen 180° und 360° beträgt, angeordnet sein.

Außerdem wird eine Verwendung des Fluidventils nach einem der Ansprüche 1 bis 6 als Kühlwasserventil eines Kühlwasserkreislaufs vorgeschlagen. Bei dieser Verwendung kann das Fluidventil das Kühlwasser von einem oder mehreren Eingängen auf einen oder mehrere Ausgänge des Fluidventils verteilen.

Darüber hinaus wird eine Verwendung des Fluidventils einem der Ansprüche 1 bis 6 als Mischventil eines Wärmemittelkreislaufs vorgeschlagen. In diesem Fall kann das Fluidventil mehrere Wärmemittelströme, die von mehreren Eingängen zu mindestens einem Ausgang geführt werden, mischen.

Ferner wird ein Fahrzeug mit einem Kühlmittelkreislauf oder einem Wärmemittelkreislauf vorgeschlagen, bei den der Kühlmittelkreislauf oder der Wärmemittelkreislauf mit einem Fluidventil nach einem der Ansprüche 1 bis 6 ausgestattet ist.

Des Weiteren wird ein Verfahren vorgeschlagen zur Abdichtung eines Fluidventils, bei dem zumindest zwei Rohrelemente mit einem Ventilgehäuse gefügt werden, bis sie an einem stellbaren Ventilkörper innerhalb des Ventilgehäuses anliegen und dabei eine Relativbewegung des Ventilkörpers ihnen gegenüber ermöglichen, wobei die Rohrelemente in einem Bereich der jeweiligen ventilkörperseitigen Enden mit dem Ventilgehäuse einer stoffschlüssigen Verbindung versehenen werden, um das Fluidventil gegenüber der Umgebung des Fluidventils abzudichten.

Nachdem der Ventilkörper in das Ventilgehäuse eingesetzt wurde und die Rohrelemente mit dem Ventilgehäuse bis zu ihrer Anlage am Ventilkörper gefügt wurden, kann der Ventilkörper im und gegen den Uhrzeigersinn gedreht werden, sodass die Rohrelemente aufgrund fertigungsbedingter Toleranzen durch die beiden Drehbewegungen minimal vom Ventilkörper wegverschoben werden. Auf diese Weise werden die fertigungsbedingten Toleranzen insbesondere des Ventilkörpers, seiner Lager und der Rohrelemente ausgeglichen, sodass zwischen dem Ventilkörper und den ventilkörperseitigen Enden der Rohrelemente eine maximale Dichtwirkung bei gleichzeitig minimaler Reibung realisiert wird.

Bei dem Verfahren kann zudem ein Gehäusedeckel mit dem Ventilgehäuse stoffschlüssig verbunden werden, wobei die stoffschlüssige Verbindung des Gehäusedeckels als zusätzliche Funktion gegenüber der Umgebung des Fluidventils abdichtet. Auf ein zusätzliches Dichtelement kann folglich auch an dieser Stelle verzichtet werden.

Im Weiteren wird die Erfindung unter Bezugnahme auf Figurendarstellungen im Einzelnen erläutert. Aus den Unteransprüchen und der nachfolgend detaillierten Beschreibung einer vorgeschlagenen Ausführungsform ergeben sich weitere vorteilhafte Weiterbildungen der Erfindung. Hierzu zeigen:
- Fig.1: eine Draufsicht auf ein Fluidventil, das zur besseren Darstellung keinen Gehäusedeckel aufweist, mit gefügten Rohrelementen;
- Fig.2: eine Schnittansicht durch das Fluidventil aus Fig. 1, jedoch ohne die gefügten Rohrelemente;
- Fig.3: eine Schnittansicht durch das Fluidventil aus Fig. 1 mit den gefügten Rohrelementen;
- Fig.4: eine detaillierte Schnittansicht durch das Fluidventil aus Fig. 1 mit einer stoffschlüssigen Verbindungen zwischen den Rohrelementen und einem Ventilgehäuse.

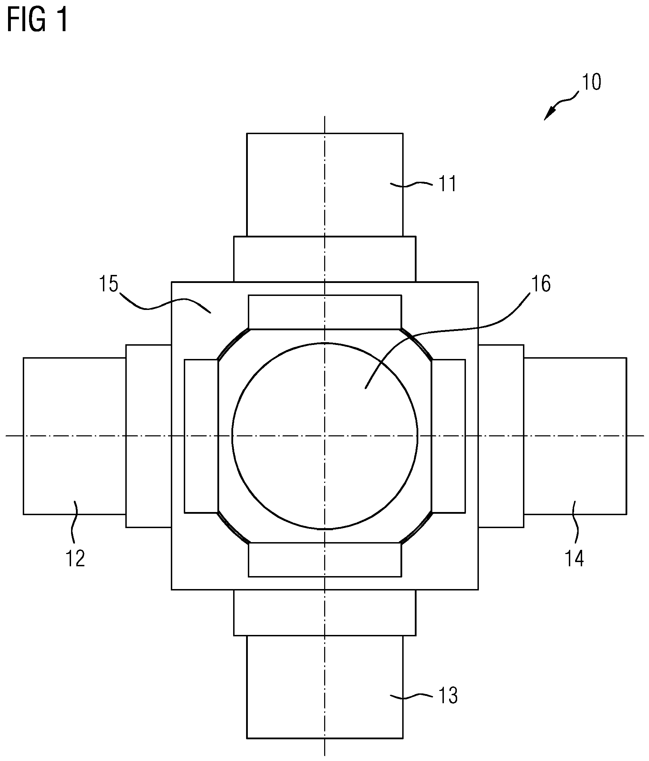

Die Fign. 1 bis 4 zeigen ein Fluidventil 10, welches als ein Verteilerventil oder ein Mischventil betrieben werden kann.

Das Fluidventil 10 weist ein Ventilgehäuse 15 auf. Im Ventilgehäuse 15 ist ein stellbarer Ventilkörper 16 montiert, der im und gegen den Uhrzeigersinn gestellt werden kann. Der Ventilkörper 16 ist mit einem Gehäusedeckel 17 abgedeckt.

Das Ventilgehäuse 15 ist mit Rohrelementen 11, 12, 13 und 14 gefügt. Die Rohrelemente 11, 12, 13 und 14 können als Einlässe oder Auslässe für das Fluidventil 10 fungieren.

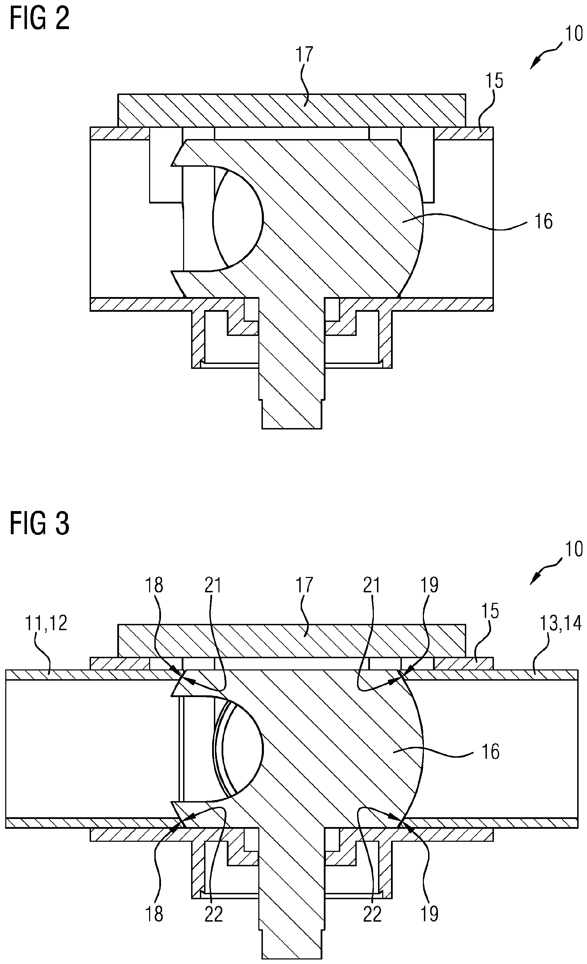

Die Rohrelemente 11, 12, 13 und 14 sind derart mit dem Ventilgehäuse 15 gefügt, dass die Rohrelemente 11, 12, 13 und 14 an ventilkörperseitigen Anlageflächen 18 und 19 am Ventilkörper 16 anliegen und/oder zumindest nahezu anliegen können (siehe Fig. 3). Der Ventilkörper 16 kann eine Relativbewegung zu den Anlageflächen 18 und 19 der Rohrelemente 11, 12, 13 und 14 ausüben.

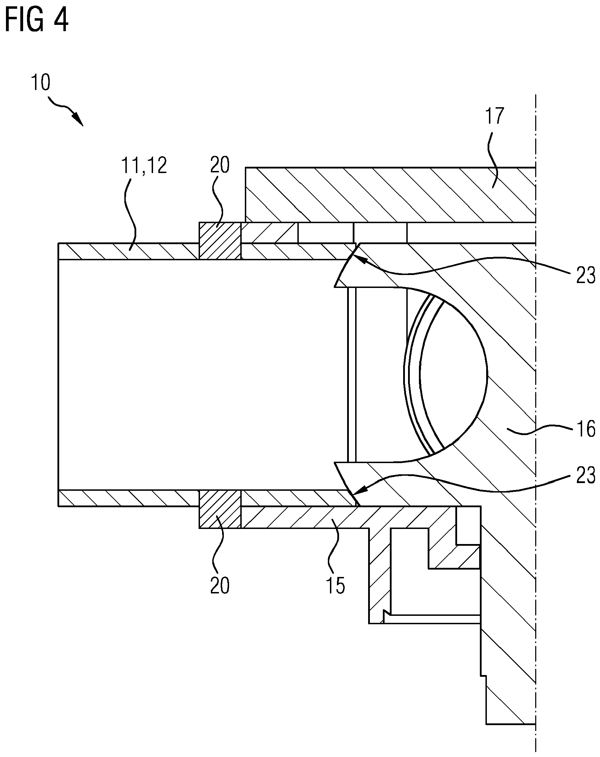

Die Rohrelemente 11, 12, 13 und 14 sind in einem Bereich ihrer ventilkörperseitigen Enden stoffschlüssig (siehe Verbindung 20) mit dem Ventilgehäuse 15 verbunden (siehe Fig. 4). Die stoffschlüssige Verbindung 20 kann vorzugsweise geschlossen umlaufend ausgebildet sein, um das Fluidventil 10 zuverlässig gegenüber seiner Umgebung abzudichten.

Die ventilkörperseitigen Anlageflächen 18 und 19 der Rohrelemente 11, 12, 13 und 14 können korrespondierend zu kugelförmig ausgestalteten Konturabschnitten 21 und 22 des Ventilkörpers 16 ausgebildet sein (siehe Fig. 3) . Durch die mit den Anlageflächen 18 und 19 der Rohrelemente 11, 12, 13 und 14 korrespondierende Ausgestaltung der Konturabschnitte 21 und 22 des Ventilkörpers 16 wird die Dichtwirkung zwischen dem Ventilkörper 16 und den Rohrelementen 11, 12, 13 und 14 optimiert.

Die Anlageflächen 18 und 19 der Rohrelemente 11, 12, 13 und 14 können poliert sein. Dadurch wird zwischen dem Ventilkörper 16, respektive den Konturabschnitten 21 und 22 eine möglichst geringe Reibung und eine verbesserte Dichtwirkung erzielt.

Zur Abdichtung des Fluidventils 10 wird zunächst der Ventilkörper 16 in das Ventilgehäuse 15 eingesetzt. Anschließend werden die Rohrelemente 11, 12, 13 und 14 mit dem Ventilgehäuse 15 gefügt, bis sie mit ihren Anlageflächen 18 und 19 an dem Ventilkörper 16 anliegen. Im nächsten Schritt wird der Gehäusedeckel 17 auf das Ventilgehäuse 15 gesetzt und vorzugsweise mit diesem stoffschlüssig verbunden. Daraufhin wird der Ventilkörper 16 im und gegen den Uhrzeigersinn gedreht. Durch die beiden entgegengesetzten Drehbewegungen werden die Rohrelemente 11, 12,13 und 14 aufgrund fertigungsbedingter Toleranzen vom Ventilkörper minimal wegverschoben, so dass ein geringer Spalt 23 zwischen dem Ventilkörper 16 und den Rohrelementen 11, 12, 13 und 14 entsteht. Der Spalt 23 reduziert die Reibung zwischen dem Ventilkörper 16 und den Rohrelementen 11, 12, 13 und 14. Anschließend wird die geschlossen umlaufende stoffschlüssige Verbindung 20 aufgebracht, um das Fluidventil 20 gegenüber seiner Umgebung zuverlässig abzudichten. Alternativ kann der Gehäusedeckel 17 auch erst nach diesem Schritt auf das Ventilgehäuse 15 gesetzt und dann mit diesem stoffschlüssig verbunden werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Fluidventil (10) mit einem einen Gehäusedeckel (17) aufweisenden Ventilgehäuse (15), einem relativ zum Ventilgehäuse stellbaren Ventilkörper (16) und mindestens zwei mit dem Ventilgehäuse (15) gefügten Rohrelementen (11, 12, 13, 14), welche mit dem Ventilgehäuse (15) derart gefügt sind, dass sie an Anlageflächen (18, 19) am Ventilkörper (16) anliegen und/oder zumindest nahezu anliegen und dabei eine Relativbewegung des Ventilkörpers (16) ihnen gegenüber ermöglichen, wobei die Rohrelemente (11, 12, 13, 14) in einem Bereich ihrer jeweiligen ventilkörperseitigen Enden mit dem Ventilgehäuse (15) stoffschlüssig verbunden (20) sind, um das Fluidventil (10) gegenüber der Umgebung des Fluidventils (10) abzudichten.

2. Fluidventil (10) nach Anspruch 1, wobei die stoffschlüssige Verbindung (20) der Rohrelemente (11, 12, 13, 14) mit dem Ventilgehäuse (15) geschlossen umlaufend ausgebildet ist.

3. Fluidventil (10) nach einem der vorhergehenden Ansprüche, wobei die ventilkörperseitigen Anlageflächen (18, 19) der Rohrelemente (11, 12, 13, 14) korrespondierend zu einem Konturabschnitt (21, 22) des Ventilkörpers (16) ausgebildet sind.

4. Fluidventil (10) nach einem der vorhergehenden Ansprüche, wobei der mit den Rohrelementen (11, 12, 13, 14) korrespondierende Konturabschnitt des Ventilkörpers (16) kugelförmig oder zylinderförmig ausgebildet ist.

5. Fluidventil (10) nach Anspruch 3 oder 4, wobei die Anlagefläche (18, 19) der Rohrelemente (11, 12, 13, 14) poliert ist.

6. Fluidventil (10) nach einem der vorhergehenden Ansprüche, wobei die Rohrelemente (11, 12, 13, 14) mit dem Ventilgehäuse (15) verklebt oder verschweißt, insbesondere laserverschweißt sind.

7. Verwendung eines Fluidventils (10) nach einem der Ansprüche 1 bis 6 als Kühlwasserventil eines Kühlwasserkreislaufs.

8. Verwendung eines Fluidventils (10) nach einem der Ansprüche 1 bis 6 als Mischventil eines Wärmemittelkreislaufs.

9. Fahrzeug mit einem Kühlmittelkreislauf oder Wärmemittelkreislauf, wobei der Kühlmittelkreislauf oder der Wärmemittelkreislauf mit einem Fluidventil (10) nach einem der Ansprüche 1 bis 6 ausgestattet ist.

10. Verfahren zur Abdichtung eines Fluidventils (10), bei dem zumindest zwei Rohrelemente (11, 12, 13, 14) mit einem Ventilgehäuse (15) gefügt werden, bis sie an einem stellbaren Ventilkörper (16) innerhalb des Ventilgehäuses (15) anliegen und dabei eine Relativbewegung des Ventilkörpers (16) ihnen gegenüber ermöglichen, wobei die Rohrelemente (11, 12, 13, 14) in einem Bereich der jeweiligen ventilkörperseitigen Enden mit dem Ventilgehäuse (15) stoffschlüssig verbunden (20) werden, um das Fluidventil (10) gegenüber der Umgebung des Fluidventil (10) abzudichten.

11. Verfahren nach Anspruch 10, wobei zudem ein Gehäusedeckel (17) mit dem Ventilgehäuse (15) stoffschlüssig verbunden wird, wobei auch die stoffschlüssige Verbindung des Gehäusedeckels (17) gegenüber der Umgebung des Fluidventil abdichtet.
